Europäisches Patentamt

European Patent Office

Office européen des brevets

(19)

(11) Veröffentlichungsnummer: **0 071 241**
**B1**

(12) **EUROPÄISCHE PATENTSCHRIFT**

(45) Veröffentlichungstag der Patentschrift:
02.10.85

(21) Anmeldenummer: 82106773.3

(22) Anmeldetag: 27.07.82

(51) Int. Cl.⁴: **C 04 B 35/56, C 04 B 35/64**

(54) **Praktisch porenfreie Formkörper aus polykristallinem Siliciumcarbid, die durch isostatisches Heisspressen hergestellt worden sind.**

(30) Priorität: 28.07.81 DE 3129633

(43) Veröffentlichungstag der Anmeldung:
09.02.83 Patentblatt 83/6

(45) Bekanntmachung des Hinweises auf die Patenterteilung:
02.10.85 Patentblatt 85/40

(84) Benannte Vertragsstaaten:
**AT BE CH DE FR GB IT LI NL SE**

(56) Entgegenhaltungen:
**DE - A - 2 710 628**
**GB - A - 2 062 011**

(73) Patentinhaber: Elektroschmelzwerk Kempten GmbH,
Herzog-Wilhelm-Strasse 16, D-8000 München 22 (DE)

(72) Erfinder: Kriegesmann, Jochen, Dr., Dipl.-Ing.,
Vorwaldstrasse 75, D-8968 Durach-Bechen (DE)
Erfinder: Hunold, Klaus, Dr., Dipl.-Ing., Hirschdorfer
Weg 3, D-8960 Kempten (DE)
Erfinder: Lipp, Alfred, Dr., Dipl.-Chem.,
Bürgermeister-Singer-Strasse 15, D-8939 Bad
Wörishofen (DE)
Erfinder: Reinmuth, Klaus, Dr. Dipl.-Chem., An der
Halde 21, D-8961 Durach (DE)
Erfinder: Schwetz, Karl Alexander, Dr., Dipl.-Ing.,
Bergstrasse 4, D-8961 Sulzberg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Formkörper aus polykristallinem Siliciumcarbid sind bekannt. Sie zeichnen sich durch eine Kombination wertvoller Eigenschaften aus, wie Oxidationsbeständigkeit, hohe Temperaturwechselbeständigkeit, hohe Wärmeleitfähigkeit, hohe mechanische Festigkeit und hohe Härte. Aufgrund dieser Eigenschaften sind sie beispielsweise als Werkstoffe im Hochtemperaturmaschinenbau, insbesondere für Heißgasturbinen von Bedeutung.

Die Herstellung derartiger Formkörper ist jedoch mit Schwierigkeiten verbunden, denn es ist ebenfalls bekannt, daß sich reines Siliciumcarbidpulver, ohne Mitverwendung von Sinterhilfsmitteln nur unter sehr drastischen Bedingungen hochverdichten läßt, beispielsweise bei Temperaturen von 3500°C bis 4000°C unter gleichzeitiger Anwendung von 689 MPa (100 000 Psi) (vgl. US-PS 3 158 442) oder unter Diamant-Synthese-Bedingungen (vgl. US-PS 3 667 911).

Wegen dieser bekannten Sinterträgheit von Siliciumcarbidpulver sind daher bereits verschiedene Zusätze als Sinterhilfsmittel bekanntgeworden, die in Abhängigkeit von dem jeweils angewendeten Verfahren zu mäßig dichten bis dichten Formkörpern führen. Hohe Dichte allein ist aber kein ausschlaggebendes Kriterium für hervorragende Eigenschaften des betreffenden Körpers, wie z. B. die Hochtemperaturfestigkeit; denn die hohe mechanische Festigkeit, zu deren Charakterisierung die Biegebruchfestigkeit herangezogen werden kann, sollte auch bei hohen Temperaturen, das heißt bis zu mindestens 1500°C, unverändert erhalten bleiben.

Das älteste der bekannten Verfahren zur Herstellung von dichten Siliciumcarbidformkörpern beruht auf der sogenannten Reaktionssinterung, bei dem Siliciumcarbidpulver mit Kohlenstoff und/oder einem organischen Harzbindemittel unter Bildung von vorgeformten Körpern verarbeitet wird, die anschließend in Gegenwart einer Silicium enthaltenden Atmosphäre erhitzt werden. Der Kohlenstoff reagiert dabei mit dem Silicium unter Bildung von zusätzlichem SiC, wodurch eine Verbindung der bereits vorliegenden SiC-Körner erreicht wird. Vorhandene Poren werden gleichzeitig durch Infiltration mit überschüssigem Silicium ausgefüllt. Die so erhaltenen Sinterkörper weisen zwar eine sehr hohe Dichte auf, da sie praktisch porenfrei sind, aber sie enthalten freies Silicium. Ihrer Verwendung als Werkstoffe im Hochtemperaturmaschinenbau sind daher enge Grenzen gesetzt, da sie bei Temperaturen oberhalb von 1400°C zum Ausschwitzen von Silicium (Fp. 1440°C) neigen.

Dichte Siliciumcarbidformkörper können ferner nach dem konventionellen Heißpreß- oder Drucksinterverfahren mit Graphitformen unter Verwendung von Aluminium oder Bor enthaltenden Zusätzen als Sinterhilfsmittel hergestellt werden.

Die besten Ergebnisse, die bisher mit Hilfe des Heißpreß- oder Drucksinterverfahrens erzielt werden konnten, führten zu Formkörpern aus polykristallinem $\alpha$- bzw. $\beta$-Siliciumcarbid mit einer Dichte von mindestens 99% der theoretischen Dichte des Siliciumcarbids (im folgenden als % TD abgekürzt), die aus $\alpha$- bzw. $\beta$-SiC-Pulver zusammen mit geringen Mengen eines Aluminium enthaltenden Zusatzes, wie Aluminiumpulver, Aluminiumnitrid oder Aluminiumphosphid bei Temperaturen bis zu 2300°C bzw. 2200°C unter Anwendung eines Stempeldrucks von mindestens 100 bar (10 MPa) bei gleichzeitiger Formgebung heißgepreßt worden sind.

Die so hergestellten Formkörper haben ein praktisch einphasiges Mikrogefüge, da die zusätzlichen Bestandteile im wesentlichen in Form einer festen Lösung im SiC-Gitter vorliegen. Sie zeichnen sich durch eine gute Hochtemperaturfestigkeit aus mit Biegebruchfestigkeiten von mindestens 600 N/mm² bis zu 1450°C, die jedoch Werte von 700 N/mm² nicht erreichten (vgl. EP 21 239 A 1 und EP 22 522 A 1).

Die auf diese Weise erhältlichen Formkörper aus polykristallinem Siliciumcarbid mit geringer Porosität haben demnach zwar gute Hochtemperatureigenschaften, dennoch ist durch die unbedingt erforderliche Mitverwendung des Aluminium enthaltenden Zusatzes als Sinterhilfsmittel bei ihrer Herstellung die Bildung von glasartigen Alumosilikatschichten an den Korngrenzen des zu verdichtenden Pulvers nicht gänzlich auszuschließen, die aber bereits in sehr geringen Konzentrationen die genannten Eigenschaften störend beeinflussen können.

Darüber hinaus sind die Formgebungsmöglichkeiten beim Heißpressen begrenzt, da hiermit nur relativ einfach geformte Körper hergestellt und in einer üblichen, mittels Stempeldruck betriebenen Heißpresse jeweils nur ein oder wenige Formkörper gleichzeitig verdichtet werden können.

Versuche, das aufwendige Heißpreßverfahren auch bei Siliciumcarbid durch das sogenannte Drucklossinterverfahren zu ersetzen, sind ebenfalls bereits bekanntgeworden.

Die besten hiermit erreichten Ergebnisse führten jedoch nur zu Formkörpern aus polykristallinem $\alpha$-SiC mit weniger als 99% TD, die aus $\alpha$-SiC in Submikronpulverform zusammen mit einem Aluminium enthaltenden Zusatz und einem Kohlenstoff enthaltenden Zusatz unter Formgebung kalt verpreßt und anschließend bei einer Temperatur von 2000° bis 2300°C drucklos gesintert worden sind.

In den so hergestellten Formkörpern liegt aber der zusätzliche Kohlenstoff mindestens teilweise in freier elementarer Form vor, die als zweite Phase neben dem SiC nachgewiesen werden kann. Die Festigkeits-Eigenschaften dieser Formkörper mit einer Gesamtporosität von maximal 2 Vol.-% sind dementsprechend weniger gut mit Biegebruchfestigkeitswerten von nur knapp 600 N/mm² (vgl. EP 4 031 B 1).

Es stellt sich somit die Aufgabe, praktisch porenfreie Formkörper aus polykristallinem Siliciumcarbid zur Verfügung zu stellen, die durch Verdichtung von reinem SiC-Pulver ohne Mitverwendung von Sinterhilfsmitteln hergestellt worden sind, ohne daß hierzu drastische Bedingungen hinsichtlich Druck und Temperatur oder Diamant-Synthese-Bedingungen erforderlich sind.

Die erfindungsgemäßen praktisch porenfreien Formkörper bestehen aus polykristallinem $\alpha$- und/ oder $\beta$-Siliciumcarbid in Form eines einphasigen, homogenen Mikrogefüges mit Korngrößen von maximal 8 μm, die aus reinem SiC-Pulver mit einem Gesamtgehalt an metallischen Verunreinigungen von höchstens 0,1 Gew.-%, durch isostatisches Heißpressen in einer vakuumdicht geschlossenen Hülle bei einer Temperatur von 1900° C bis 2300° C und einem Druck von 100 bis 400 MPa (1–4 kbar) im Hochdruckautoklaven unter Verwendung eines inerten Gases als Druckübertragungsmedium hergestellt worden sind.

Für die Herstellung der erfindungsgemäßen Formkörper werden als Ausgangsmaterial vorteilhaft feine Pulver aus $\alpha$- oder $\beta$-SiC oder Gemische aus $\alpha$- und $\beta$-SiC mit einer Teilchengröße von 4 μm und feiner und einem SiC-Gehalt von mindestens 97,5 Gew.-% verwendet. Der Gesamtgehalt an metallischen Verunreinigungen in diesen Pulvern beträgt definitionsgemäß nicht mehr als 0,1 Gew.-%. Hierunter sind alle metallischen Elemente zu verstehen mit Ausnahme des in gebundener Form vorliegenden Siliciums. Der noch verbleibende Differenzbetrag bis zu 100 Gew.-% verteilt sich vorwiegend auf Sauerstoff in Form von anhaftendem Siliciumdioxid und auf anhaftenden Kohlenstoff.

Der von der Herstellung her in handelsüblichem Siliciumcarbidpulver vorhandene anhaftende Kohlenstoff kann bis zu höchstens 0,6 Gew.-% toleriert werden. Das aufgrund der bekannten Oxidationsneigung von Siliciumcarbid beim Mahlvorgang gebildete, anhaftende Siliciumdioxid, das zwar durch eine anschließende Flußsäurebehandlung entfernt werden kann, wobei jedoch ein Restgehalt verbleibt, der um so größer ist, je feiner das Pulver ist, kann bis zu höchstens 1,8 Gew.-% toleriert werden.

Als Maß für die Teilchengröße der Pulver von 4 μm und feiner wird zweckmäßig die spezifische Oberfläche herangezogen (gemessen nach der BET-Methode). Siliciumcarbidpulver mit einer spezifischen Oberfläche von 4 bis 40 m²/g, vorzugsweise von 5 bis 20 m²/g haben sich hierbei besonders bewährt.

Für die Herstellung der erfindungsgemäßen Formkörper kann das Siliciumcarbidpulver per se ohne weitere Vorbehandlung in vorgefertigte Hüllen oder Kapseln von beliebiger Form eingefüllt und durch Vibration verdichtet werden. Anschließend werden die Hüllen samt Inhalt evakuiert und dann gasdicht verschlossen.

Das Siliciumcarbidpulver kann jedoch auch zu Körpern mit offener Porosität, das heißt mit zur Oberfläche offenen Poren vorgeformt und dann mit einer gasdichten Hülle versehen werden. Für die Formgebung kann das Siliciumcarbidpulver zusammen mit einem temporären Bindemittel vermischt oder in einer Lösung des temporären Bindemittels in einem organischen Lösungsmittel dispergiert werden. Als organische Lösungsmittel können beispielsweise Aceton oder niedere aliphatische Alkohole mit 1 bis 6 C-Atomen verwendet werden. Beispiele für temporäre Bindemittel sind Polyvinylalkohol, Stearinsäure, Polyethylenglykol und Campher, die in Mengen bis zu etwa 5 Gew.-%, bezogen auf das Gewicht des SiC verwendet werden können. Die Mitverwendung des temporären Bindemittels ist jedoch nicht unbedingt erforderlich. So können beispielsweise sehr feine Pulver auch mit dem organischen Lösungsmittel angefeuchtet werden, wobei sich Isopropylalkohol besonders bewährt hat. Die Formgebung kann durch übliche bekannte Maßnahmen, beispielsweise durch Gesenkpressen, isostatisches Pressen, Spritzgießen, Strangpressen oder Schlickergießen bei Raumtemperatur oder bei erhöhter Temperatur vorgenommen werden. Nach der Formgebung sollten die Grünkörper eine theoretische Dichte von mindestens 50%, vorzugsweise 60% TD aufweisen. Anschließend werden die Grünkörper vorteilhaft einer thermischen Behandlung durch Erhitzen auf 300° bis 1200° C unterzogen, bevor sie mit der gasdichten Hülle versehen werden, um sicher zu stellen, daß bei der heißisostatischen Verdichtung keine gasförmigen Zersetzungsprodukte aus den Bindemitteln den Verdichtungsvorgang stören oder die Hülle beschädigen.

Als Material für die gasdicht verschließbaren Hüllen, das bei der für SiC erforderlichen Verdichtungstemperatur von 1900° C bis 2300° C plastisch verformbar sein muß, können hochschmelzende Metalle, wie Wolfram, Molybdän oder Tantal, Metall-Legierungen, intermetallische Verbindungen, wie Molybdän- oder Wolfram-Silicid, hochschmelzende Gläser, wie reines Kieselglas oder hochschmelzende Keramikarten verwendet werden. Bei Einsatz des SiC-Pulvers per se sind vorgefertigte Hüllen oder Kapseln erforderlich, die auch bei Einsatz der vorgeformten Körper Verwendung finden können. Bei vorgeformten Körpern kann die gasdichte Hülle jedoch auch durch direkte Beschichtung erzeugt werden, beispielsweise durch stromlose Naßabscheidung einer Metallschicht oder durch Auftragen einer glas- oder keramikartigen Masse, die anschließend unter Bildung der gasdichten Hülle geschmolzen oder gesintert wird.

Die gehüllten Proben werden vorteilhaft in Graphitbehältern in den Hochdruckautoklaven eingebracht und auf die erforderliche Verdichtungstemperatur von mindestens 1900° C erhitzt. Hierbei ist es vorteilhaft, Druck und Temperatur getrennt zu regeln, das heißt den Gasdruck erst dann zu erhöhen, wenn das Hüllmaterial anfängt, sich unter dem Druck plastisch zu verformen. Als inerte Gase für die Druckübertragung werden vorzugsweise Argon oder Stickstoff verwendet. Der angewendete Druck liegt vorzugsweise im Bereich von 150 bis 250 MPa (1,5 bis 2,5 kbar), der unter langsamer Erhöhung bei der jeweils angewendeten Endtemperatur erreicht wird, die vorzugsweise im Bereich von 1950° C bis 2100° C liegt. Die jeweils optimale Temperatur ist abhängig von der Feinheit und der Reinheit des

3

verwendeten SiC-Pulvers und sollte nicht überschritten werden, weil sonst die Gefahr besteht, daß die gebildeten praktisch porenfreien Formkörper ein sogenanntes »sekundärrekristallisiertes Gefüge« aufweisen, das nicht mehr homogen ist, weil einige Körner stärker als die übrigen gewachsen sind.

Nach Erniedrigung von Druck und Temperatur werden die abgekühlten Körper aus dem Hochdruckautoklaven entnommen und von den Hüllen befreit, beispielsweise durch Abdrehen der Metallhüllen, durch Sandstrahlbehandlung der Glas- oder Keramikhüllen oder durch chemisches Abtragen.

Die so hergestellten Formkörper sind nicht nur praktisch porenfrei mit einer Dichte von mindestens 99% TD, sondern sie sind aufgrund der allseitigen Druckanwendung auch praktisch texturfrei, so daß ihre Eigenschaften nicht mehr richtungsabhängig, sondern in allen Richtungen gleichbleibend sind. Für die zur Charakterisierung der Hochtemperaturfestigkeit herangezogene Biegebruchfestigkeit, die nicht mehr durch sekundäre Phasen an den Korngrenzen aus Sinterhilfsmittelzusätzen störend beeinflußt werden kann, werden Werte von > 700 N/mm$^2$ erreicht, die bis zu etwa 1400°C unverändert bleiben. Gleichzeitig werden durch die Homogenität der Eigenschaften im Vergleich zum heißgepreßten und drucklosgesinterten SiC geringere Standardabweichungen der Eigenschaftswerte erreicht, was sich z. B. bei der Biegefestigkeit durch einen höheren Weibullmodul positiv bemerkbar macht.

Die Formkörper bestehen aus polykristallinem $\alpha$- oder $\beta$-SiC, in Abhängigkeit von der Modifikation des verwendeten Ausgangs-SiC-Pulvers. Die erfindungsgemäßen Formkörper aus polykristallinem SiC haben demnach nicht nur bessere Eigenschaften als solche, die unter Mitverwendung von Sinterhilfsmitteln hergestellt worden sind, sondern sie können auch auf einfachere Weise hergestellt werden, da sowohl der aufwendige Mischvorgang entfällt, der für die homogene Verteilung der Sinterhilfsmittel unbedingt erforderlich ist, als auch die eingeschränkte Formgebungsmöglichkeit beim üblichen Heißpressen. Hochdruckautoklaven können einen großen Ofenraum haben, in dem zahlreiche gehüllte Proben von beliebiger Gestalt gleichzeitig heißisostatisch verdichtet werden können.

Obwohl es bekannt ist, daß mit Hilfe des isostatischen Heißpreßverfahrens Körper aus pulverförmigen Werkstoffen hochverdichtet werden können, muß es als überraschend bewertet werden, daß dies im Falle des Siliciumcarbids nunmehr ohne die Mitverwendung von Sinterhilfsmitteln gelingt, und zwar unter praktisch gleichen Temperaturbedingungen, wie sie bisher beim üblichen Heißpressen von SiC unter gleichzeitiger Mitverwendung von Sinterhilfsmitteln angewendet wurden. Der angewendete Druck ist zwar höher als beim üblichen Heißpressen, aber der erhöhte Druck allein kann für das erzielte Ergebnis nicht verantwortlich sein, das wird inbesondere durch die Untersuchungen von J. S. Nadeau in »Ceramic Bulletin«, Vol. 52, S. 170—174 (1973) bestätigt, der nachgewiesen hat, daß reines SiC-Pulver ohne Sinterhilfsmittel durch Heißpressen unter Stempeldruckanwendung erst bei Temperaturen von 2500°C unter einem Druck von 3000 bis 5000 MPa (30 bis 50 kbar) bis zu 99,5% verdichtet werden konnte. Scheinbar die gleiche Dichte konnte durch Kaltpressen bei einem Druck von 5000 MPa (50 kbar) und anschließendem Heißpressen bei nur 1500°C und einem Druck von 1000 MPa (10 kbar) erreicht werden, aber in diesem Fall war die Bindung der Körner so schwach, daß diese durch leichtes Kratzen mit einer Nadelspitze voneinander getrennt werden konnten.

Die Erfindung wird anhand der folgenden Beispiele näher erläutert:

## Beispiel 1

50 g $\beta$-SiC-Pulver mit folgender Analyse

|            | Gew.-%   |
|------------|----------|
| SiC        | 98,50    |
| SiO$_2$    | 0,83     |
| C anhaftend| 0,35     |
| F          | < 0,01   |
| N          | 0,05     |
| Al         | 0,03     |
| Fe         | 0,03     |
| B          | < 0,01   |
| Mg         | < 0,01   |
| Ti         | < 0,01   |
| Ni         | < 0,01   |
| Ca         | < 0,005  |

und mit einer spezifischen Oberfläche von 12,7 m$^2$/g wurden in eine Kieselglashülle der Abmessung 20 mm Durchmesser und 120 mm Höhe eingefüllt und durch Einvibrieren verdichtet. Dann wurde die Hülle im Feinvakuum auf 1000°C aufgeheizt und im Knallgasbrenner zugeschmolzen. Diese gehüllte Probe wurde bei 2050°C unter 200 MPa (2 kbar) Maximaldruck und einer Haltezeit von 30 min unter Argon verdichtet. Nach dem Abkühlen und dem Entfernen der Glasreste wurden drei Biegeproben der Abmessung 2 × 4 × 34 mm aus dem Formkörper geschnitten, die durchschnittliche 4-Punkt-Biegefestigkeit (unterer Auflagenabstand 30 mm, oberer Auflagenabstand 15 mm) betrug 722 N/mm$^2$. Die

4

Proben brachen transkristallin, die durchschnittliche Dichte betrug 3,18 g/cm³, das entspricht 99% der theoretischen Dichte.

## Beispiel 2

600 g $\alpha$-Siliciumcarbidpulver mit folgender Analyse

|     | Gew.-% |
|-----|--------|
| SiC | 97,80 |
| SiO₂ | 1,44 |
| C anhaftend | 0,58 |
| F | 0,01 |
| N | < 0,01 |
| Al | 0,02 |
| Fe | < 0,01 |
| B | < 0,01 |
| Mg | < 0,01 |
| Ti | < 0,01 |
| Ni | < 0,01 |
| Ca | < 0,005 |

und mit einer spezifischen Oberfläche von 14,6 m²/g wurden mit 3 Gew.-% Campher in Aceton in einer Knetvorrichtung 3 Std. vermischt. Das in einem Trockenschrank bei 60°C 4 Std. getrocknete Pulver wurde in Gummihülsen bei 500 MPa (5 kbar) kaltisostatisch zu Grünkörpern der rohen Abmessung 20 mm Durchmesser × 100 mm Höhe vorgeformt. Die Grünkörper wurden in einseitig geschweißte Molybdän-Hüllrohre mit 1 mm Wandstärke und 20 mm Innendurchmesser eingepaßt und im Hochvakuum bei 1000°C 1 Std. lang entgast. Anschließend wurden Molybdändeckel auf die Hüllrohre in einer Elektronenstrahlschweißanlage aufgeschweißt. Diese gehüllten Proben wurden bei 2000°C 1 Std. unter einem Argondruck von 200 MPa (2 kbar) heißisostatisch verdichtet. Aus den erhaltenen Formkörpern mit einer durchschnittlichen Dichte von 3,19 g/cm³ (99,4% TD) wurden je 5 Biegeproben mit den Abmessungen von Beispiel 1 geschnitten und die Festigkeit mit der in Beispiel 1 angeführten Biegeapparatur bei Raumtemperatur und 1370°C bestimmt.

Sie betrug durchschnittlich 776 N/mm² bei Raumtemperatur und 793 N/mm² bei 1370°C. Das Gefüge zeigte eine Korngröße von maximal 4 μm.

## Beispiel 3

100 g $\alpha$-SiC-Pulver mit folgender Analyse

|     | Gew.-% |
|-----|--------|
| SiC | 98,90 |
| SiO₂ | 0,60 |
| C anhaftend | 0,18 |
| F | < 0,01 |
| N | 0,06 |
| Al | 0,03 |
| Fe | 0,03 |
| B | < 0,01 |
| Mg | < 0,01 |
| Ti | < 0,01 |
| Ni | < 0,01 |
| Ca | < 0,005 |

und mit einer spezifischen Oberfläche von 7,0 m²/g wurden mit 3 Gew.-% Campher versetzt und mit einigen Stahlkugeln 30 min in einem Kunststoffbehälter vermischt. Die Mischung wurde bei 60°C in einem Vakuumtrockenschrank getrocknet und in einem Gummibehälter bei 500 MPa (5 kbar) kaltisostatisch zu einem Grünkörper vorgeformt. Der Grünkörper wurde im Vakuum bei 1000°C ausgeheizt und in eine Kieselglashülle gegeben, die evakuiert und anschließend mit einer Knallgasflamme zugeschmolzen wurde. Anschließend wurde die gehüllte Probe in einer Argonatmosphäre bei 2000°C unter einem Druck von 200 MPa (2 kbar) 2 Std. heißisostatisch verdichtet. Der Formkörper hatte eine Dichte von 3,20 g/cm³, d. i. 99,7% der theoretischen Dichte. Das Gefüge der Probe wies Korngrößen bis zu maximal 5 μm auf.

Es sei hier angemerkt, daß dieses Pulver sich auch zusammen mit 1 Gew.-% Bor und 1 Gew.-%

Kohlenstoff, zugegeben als Novolak, drucklos sintern ließ unter Bildung eines Formkörpers mit einer Dichte von nicht mehr als 2,80 g/cm³, d. i. etwa 87% der theoretischen Dichte.

**Patentansprüche**

1. Praktisch porenfreie Formkörper mit einer Dichte von mindestens 99% TD, bestehend aus polykristallinem $\alpha$- und/oder $\beta$-Siliciumcarbid in Form eines einphasigen homogenen Mikrogefüges mit Korngrößen von maximal 8 μm, die aus reinem SiC-Pulver mit einem Gesamtgehalt an metallischen Verunreinigungen von höchstens 0,1 Gew.-%, durch isostatisches Heißpressen in einer vakuumdicht geschlossenen Hülle bei einer Temperatur von 1900°C bis 2300°C und einem Druck von 100 bis 400 MPa (1 bis 4 kbar) im Hochdruckautoklaven unter Verwendung eines inerten Gases als Druckübertragungsmedium hergestellt worden sind.

2. Formkörper nach Anspruch 1, die unter Verwendung eines Siliciumcarbid-Pulvers aus

| mindestens | 97,5 Gew.-% $\alpha$- und/oder $\beta$-SiC |
| bis zu | 1,8 Gew.-% $SiO_2$ |
| bis zu | 0,6 Gew.-% C |
| bis zu | 0,1 Gew.-% metallischen Verunreinigungen insgesamt, |

mit einer Teilchengröße von 4 μm und feiner hergestellt worden sind.

3. Verfahren zur Herstellung der Formkörper nach Anspruch 1 und 2 durch isostatisches Heißpressen im Hochdruckautoklaven unter Verwendung eines inerten Gases als Druckübertragungsmedium, dadurch gekennzeichnet, daß das Siliciumcarbidpulver in vorgefertigte Hüllen eingefüllt und durch Vibration verdichtet wird, anschließend die Hüllen samt Inhalt vakuumdicht verschlossen und die gehüllten Proben im Hochdruckautoklaven auf 1900°C bis 2300°C unter langsamer Erhöhung des Gasdrucks auf 100 bis 400 MPa (1 bis 4 kbar) bis zur Bildung der praktisch porenfreien Formkörper mit einer Dichte von mindestens 99% TD erhitzt, nach dem Abkühlen aus dem Hochdruckautoklaven entnommen und von den Hüllen befreit werden.

4. Verfahren zur Herstellung der Formkörper nach Anspruch 1 bis 2 durch isostatisches Heißpressen im Hochdruckautoklaven unter Verwendung eines inertes Gases als Druckübertragungsmedium, dadurch gekennzeichnet, daß das Siliciumcarbidpulver zusammen mit einem temporären Bindemittel unter Formgebung zu Körpern mit zur Oberfläche offenen Poren vorgeformt und diese vorgeformten Körper mit einer Dichte von mindestens 50% der theoretischen Dichte des Siliciumcarbids in vorgefertigte Hüllen eingesetzt oder mit einem, einen vakuumdichte Hülle bildenden Material beschichtet werden, die Hüllen vakuumdicht verschlossen und die gehüllten Proben im Hochdruckautoklaven auf 1900°C bis 2300°C unter langsamer Erhöhung des Gasdrucks auf 100 bis 400 MPa (1 bis 4 kbar) bis zur Bildung der praktisch porenfreien Formkörper mit einer Dichte von mindestens 99% TD erhitzt, nach dem Abkühlen aus dem Hochdruckautoklaven entnommen und von den Hüllen befreit werden.


**Claims**

1. Substantially pore-free shaped articles having a density of at least 99% TD and comprising polycrystalline $\alpha$- and/or $\beta$-silicon carbide in the form of a single-phase homogeneous microstructure having grain sizes not exceeding 8 μm, which have been manufactured from pure SiC powder having a total content of metallic impurities not exceeding 0,1% by weight, by isostatic hot-pressing in a vacuum-tight casing at a temperature of from 1900°C to 2300°C and a pressure of from 100 to 400 MPa (1 to 4 kbar) in a high-pressure autoclave using an inert gas as pressure-transfer medium.

2. Shaped articles according to claim 1, which have been manufactured using a silicon carbide powder comprising

| at least | 97,5% by weight of $\alpha$- and/or $\beta$-SiC |
| up to | 1,8% by weight of $SiO_2$ |
| up to | 0,6% by weight of C |
| up to | 0,1% by weight, in total, of metallic impurities, |

and having a particle size of 4 μm and finer.

3. Process for the manufacture of the shaped articles according to claims 1 and 2 by isostatic hot-pressing in a high-pressure autoclave using an inert gas as pressure-transfer medium, characterised in that the silicon carbide powder is introduced into prefabricated casings and rendered more dense by vibration, subsequently the casings together with their contents are sealed so that they are vacuum-tight and the encased samples are heated in a high-pressure autoclave to from 1900°C to 2300°C while slowly increasing the gas pressure to 100 to 400 MPa (1 to 4 kbar) until substantially pore-free shaped articles are formed having a density of at least 99% TD, which, after they have

**0 071 241**

cooled, are removed from the high-pressure autoclave and freed from the casings.

4. Process for the manufacture of the shaped articles according to claims 1 and 2 by isostatic hot-pressing in a high-pressure autoclave using an inert gas as pressure-transfer medium, characterised in that the silicon carbide powder together with a temporary binder is preshaped with shaping into articles having pores open to the surface and those preshaped articles, having a density of at least 50% of the theoretical density of the silicon carbide, are placed in prefabricated casings or are coated with a material forming a vacuum-tight casing, the casings are sealed so that they are vacuum-tight and the encased samples are heated in a high-pressure autoclave to from 1900°C to 2300°C while slowly increasing the gas pressure to 100 to 400 MPa (1 to 4 kbar) until substantially pore-free shaped articles are formed having a density of at least 99% TD, which, after they have cooled, are removed from the high-pressure autoclave and freed from the casings.

## Revendications

1. Objets moulés pratiquement exempts de pores, ayant une densité d'au moins 99% de la densité théorique, constitués de carbure de silicium $\alpha$ et/ou $\beta$ polycristallin sous la forme d'une microstructure homogène monophasée ayant des grosseurs de grains de 8 µ au maximum qui ont été fabriqués à partir d'une poudre de SiC pur ayant une teneur totale en impuretés métalliques de 0,1% en poids au maximum par pressage à chaud isostatique dans une enveloppe fermée étanche au vide, à une température de 1900°C à 2300°C et sous une pression de 100 à 400 MPa dans un autoclave à haute pression en utilisant un gaz inerte comme milieu de transfert de la pression.

2. Objets moulés suivant la revendication 1, qui ont été fabriqués en utilisant une poudre de carbure de silicium contenant:

| au moins | 97,5% en poids de SiC $\alpha$ et/ou $\beta$ |
| jusqu'à | 1,8% en poids de $SiO_2$ |
| jusqu'à | 0,6% en poids de C |
| jusqu'à | 0,1% en poids d'impuretés métalliques au total, |

ayant une taille de particules de 4 µ et moins.

3. Procédé de fabrication des objets moulés suivant les revendications 1 et 2 par pressage à chaud isostatique dans un autoclave à haute pression en utilisant un gaz inerte comme milieu de transfert de pression, caractérisé en ce que la poudre de carbure de silicium est introduite dans des enveloppes fabriquées à l'avant et comprimées par vibration, puis les enveloppes sont scellées avec leur contenu d'une manière étanche au vide et les échantillons enveloppés sont chauffés dans un autoclave à haute pression à 1900°C à 2300°C avec élévation lente de la pression du gaz à 100 à 400 MPa jusqu'à formation des objets moulés pratiquement exempts de pores ayant une densité d'au moins 99% de la DT, sont retirés après refroidissement de l'autoclave à haute pression et débarrassés des enveloppes.

4. Procédé de fabrication des objets moulés suivant l'une quelconque des revendications 1 et 2 par pressage à chaud isostatique dans un autoclave à haute pression en utilisant un gaz inerte comme milieu de transfert de la pression, caractérisé en ce que la poudre de carbure de silicium est préformée en même temps qu'un liant temporaire avec façonnage en objets ayant des pores ouverts sur la surface et en ce qu'on insère ces objets préformés ayant une densité d'au moins 50% de la densité théorique du carbure de silicium dans des enveloppes fabriquées à l'avance ou on les revêt d'une matière formant une enveloppe étanche aux vide, en ce qu'on scelle les enveloppes d'une manière étanche au vide et en ce qu'on chauffe les échantillons enveloppés dans un autoclave à haute pression à 1900 à 2300°C avec élévation lente de la pression du gaz à 100 à 400 MPa jusqu'à formation des objets moulés pratiquement exempts de pores, ayant une densité d'au moins 99% de la DT, en ce qu'on les retire de l'autoclave à haute pression après refroidissement et en ce qu'on les débarrasse des enveloppes.

7